# EUROPEAN PATENT APPLICATION

(11) **EP 4 461 136 A1**
(43) Date of publication of application: **13.11.2024**
(21) Application number: 24175072.8
(22) Date of filing: 09.05.2024
(51) Int. Cl.: A21D 13/10, A21D 13/14, A21D 13/32, A21C 5/00, A21C 9/08

(54) **METHOD FOR THE PRODUCTION OF A BISCUIT**

(30) Priority: 11.05.2023 IT 202300009381
(71) Applicant: SOREMARTEC S.A., 2633 Senningerberg (LU)
(72) Inventor: MOLLO, Marco, 12051 Alba (CN) (IT); ARAGONE, Giovanni, 12051 Alba (CN) (IT); ARSIE', Gaetano, 12051 Alba (CN) (IT); ZUNINO, Tiziano, 12051 Alba (CN) (IT); GUASTALLI, Romilbert, 12051 Alba (CN) (IT)
(74) Representative: Buzzi, Notaro & Antonielli d'Oulx S.p.A.

(57) **Abstract**

Described herein is a method for the production of a biscuit (100), comprising:
- preparing a biscuit dough; and
- forming a biscuit body (101) with the biscuit dough.

The method is characterized in that preparing said biscuit dough includes preparing a liquid biscuit dough and in that forming said biscuit body (101) includes:
- spraying said liquid biscuit dough onto a supporting surface (20) so as to cover at least one portion of said supporting surface (20) with a layer of said liquid dough (101') that has an outer contour of predefined shape; and
- baking said sprayed layer (101') of said liquid dough that covers said supporting surface (20) so as to solidify it and obtain said biscuit body.

## Description

The present invention relates to a method for the production of a biscuit.

In particular, the method described herein has the purpose of producing a biscuit that has at least one thin biscuit body, for example having a thickness of less than 2 mm, even more preferably of less than 1 mm.

To produce such a biscuit, the methods according to the prior art envisage preparing a biscuit dough, in particular an elastic dough, and forming therewith az sheet of dough that, through a process of rolling, is thinned out down to the desired thickness. The US priority document 2003/0113426A1 illustrates a method of this type for obtaining thin biscuit layers, which, in the specific application presented in this document, are subsequently laid on top of one another through interposition of layer of fillings to obtain an icecream cake.

In this context, the present invention proposes a new method that presents a series of advantages, amongst which:
- the possibility of obtaining biscuit bodies that have a thickness of less than 1 mm;
- the possibility of obtaining biscuit bodies without air bubbles inside and with a crisp structure;
- the versatility in obtaining biscuit bodies having a wide range of shapes also in the context of one and the same production process.

In particular, the present invention regards a method for the production of a biscuit according to claim 1. The present invention moreover regards a biscuit according to claim 15.

The annexed claims form an integral part of the teaching provided herein.

Further characteristics and advantages of the present invention will emerge clearly from the ensuing description with reference to the annexed drawings, which are provided purely by way of non-limiting example and in which:
- Figure 1 represents an example of the method described herein through a block diagram;
- Figure 2 illustrates a step of the method described herein according to a preferred embodiment;
- Figure 3 represents an example of biscuit obtained via the method described herein; and
- Figure 4 is a schematic illustration of an example of system for producing the biscuit of Figure 3.

In the ensuing description various specific details are illustrated aimed at enabling an in-depth understanding of the embodiments. The embodiments may be obtained without one or more of the specific details, or with other methods, components, or materials, etc. In other cases, known structures, materials, or operations are not illustrated or described in detail so that various aspects of the embodiment will not be obscured.

The references used herein are provided merely for convenience and hence do not define the sphere of protection or the scope of the embodiments.

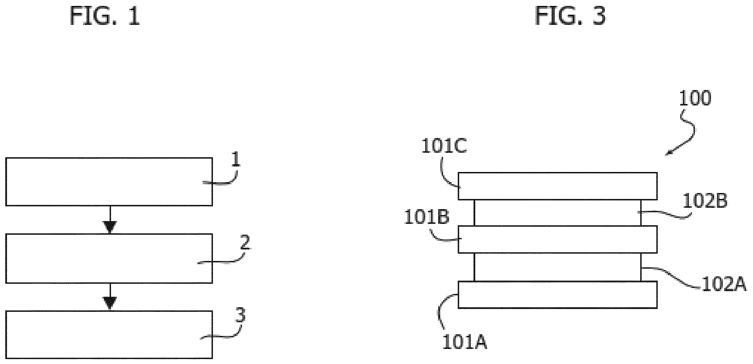

With reference to Figure 1, in general the method described herein for the production of a biscuit comprises:
- preparing a liquid biscuit dough (step 1);
- spraying the liquid biscuit dough onto a supporting surface so as to cover at least one portion of the supporting surface with a layer of the liquid dough that has an outer contour of predefined shape (step 2); and
- baking the sprayed layer of the liquid dough that covers the supporting surface so as to solidify it and obtain therefrom a biscuit body (step 3).

Preferably, the sprayed layer of the liquid biscuit dough has a thickness of less than or equal to 1 mm, even more preferably comprised between 0.3 mm and 0.7 mm.

In view of the foregoing, the method described herein is hence characterized in forming a biscuit body not via modelling of a solid dough, as in the prior art, but rather through an operation of spraying of a liquid biscuit dough against a supporting surface.

The above operation makes it possible to obtain, on the aforesaid surface, a layer of dough having a contour of predefined shape, which then undergoes baking to obtain solidification and formation of the biscuit body.

Preferably, the liquid biscuit dough has the following main ingredients:
- water, preferably in a weight percentage of between 27.8 wt% and 46.3 wt%;
- flour, preferably in a weight percentage of between 23.8 wt% and 39.6 wt%; and
- sugar, preferably in a weight percentage of between 11.9 wt% and 19.8 wt%.

Moreover, the liquid biscuit dough may also comprise the following additional ingredients:
- yeast, preferably in a weight percentage of between 0.02 wt% and 0.03 wt%;
- cocoa, preferably in a weight percentage of between the 3.2% and 5.3%;
- powdered milk, preferably in a weight percentage of between 0.5 wt% and 0.8 wt%; and
- fat, preferably in a weight percentage of between 7.9 wt% and 13.2 wt%.

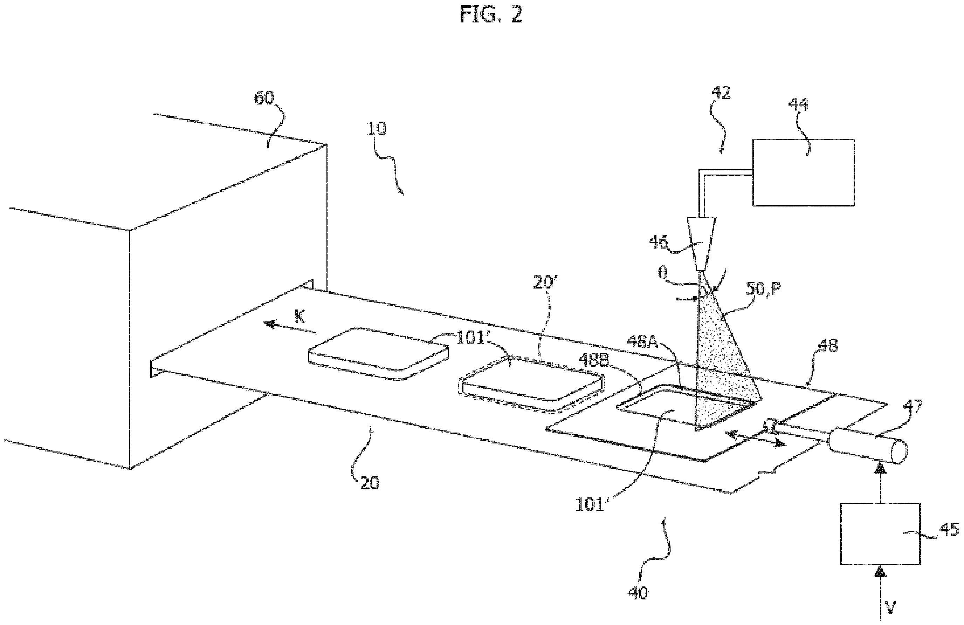

Figure 2 illustrates an example of embodiment of the spraying step referred to above.

As represented in Figure 2, the supporting surface, designated therein by the reference number 20, may be mobile in a direction of advance K to receive, at a spraying station 40, a sprayed layer 101' of liquid dough, and then send it on to a subsequent baking station 60.

Preferably, the supporting surface 20 forms part of a conveying device that receives, at the spraying station 40, a succession of sprayed layers 101' of liquid dough, and that then sends these layers to the baking station 60.

The supporting surface 20 may, for example, form part of a conveyor belt 11.

The supporting surface 20 may present a planar conformation, as in the example illustrated, or else a convex conformation, at least in the region thereof that is to receive the dough; in the former case, the biscuit body obtained on the supporting surface will present a planar conformation, whereas in the latter case, the aforesaid biscuit body will present a corresponding hollow conformation.

In one or more preferred embodiments like the one illustrated, the step of spraying the liquid biscuit dough is carried out using a spraying apparatus 42, arranged at the spraying station 40, which comprises a pump 44 and at least one nebulizer nozzle 46.

The pump 44 has the function of feeding, under pressure, the liquid biscuit dough to the nebulizer nozzle 46, preferably at a pressure comprised between 15 and 40 bar, to be adapted according to the viscosity of the liquid biscuit dough and the diameter of the nebulizer nozzle.

The nebulizer nozzle 46 has, instead, the function of nebulizing the biscuit dough and of obtaining a jet 50 of the nebulized dough directed against the supporting surface 20. Preferably, the jet 50 of the biscuit dough is a vertical jet, directed downwards.

Moreover, in one or more preferred embodiments like the one illustrated, the step of spraying the biscuit dough envisages the use of a shaped mask 48, which, during the same step, sets itself between the nebulizer nozzle 46 and the supporting surface 20 so as to expose to the jet of dough a predefined area 20' of the supporting surface 20 having a given shape.

In this way, the biscuit dough is applied on the supporting surface 20 within the contour itself, and the layer of dough that will come to be formed will hence present a corresponding, i.e., complementary, contour.

In one or more preferred embodiments like the one illustrated, the mask is constituted by a lamina 48 in which a shaped opening 48A is obtained, delimited by an inner edge 48B of predefined profile that is to identify, in projection, the area 20' on the supporting surface 20 for the purpose referred to above.

In one or more preferred embodiments like the one illustrated, the nozzle 46 is prearranged to obtain a jet that has a substantially planar conformation - in the example illustrated defining a generic plane P orthogonal to the lamina 48 - and having triangular shape, preferably with an internal angle θ comprised between 10° and 60°.

In addition, in one or more preferred embodiments, the nozzle 46 has a delivery hole having a diameter of less than 0.5 mm, even more preferably of less than 0.3 mm. In this regard, the present applicant has been able to note that such a small diameter enables nebulization of the biscuit dough in droplets with dimensions of the same order of magnitude so that the jet of dough made up of the above droplets is able to obtain a well-defined contour of the biscuit layer, with tolerances of less than 0.5 mm.

Preferably, the liquid biscuit dough has a viscosity of at least 1700 centipoise, preferably between 1900 and 5000 centipoise. Thanks to such a viscosity, the sprayed layer of dough is able to maintain, by itself, its predefined contour, after the spraying step, in the time that elapses between the end of this step and completion of the subsequent baking step.

Preferably, the nozzle 46 and the mask 48 are configured for being subjected to a mutual relative movement via which the jet 50 delivered by the nozzle 46 can be directed over the entire area defined by the shaped opening 48A of the mask 48. At the same time, the aforesaid relative movement may be controlled to follow the movement of advance of the supporting surface 20 in the direction K.

Preferably, the spraying apparatus 42 comprises an actuator 47 provided for moving the mask 48 in the direction K, and a control unit 45 governs the actuator 47 on the basis of a signal v indicating the speed of advance of the surface 20 in the direction K.

In one or more preferred embodiments, the supporting surface 20 may also be heated, for example to be brought to a temperature of at least 40°C (preferably not higher than 70°C), before the liquid dough is sprayed thereon; this means that, in the subsequent spraying step, the dough that comes into direct contact with the heated supporting surface 20 solidifies and generates a bottom solid film, in the layer of dough, that is able to favour maintenance of the respective predefined contour in the layer itself.

Preferably, the baking step is carried out inside an industrial oven, preferably at a temperature comprised between 170°C and 190°C, even more preferably between 180°C and 190°C (obviously, the temperatures may be adapted according to of the industrial oven used).

Via the baking step, there is obtained on the conveyor belt 11 a succession of biscuits 101 that extends along the path of advance of the conveyor belt 11.

Figure 3 illustrates an example of biscuit that can be obtained using the method described herein.

In particular, the biscuit illustrated in Figure 3 - which is as a whole designated by the reference number 100 - comprises three biscuit bodies 101A, 101B, 101C obtained according to the method described above, which are laid on top of one another with interposition of two layer of fillings 102A, 102B. The biscuit 100 hence comprises a multilayer structure formed by the following succession of layers (starting from beneath): the biscuit body 101A, the layer of filling 102A, the biscuit body 101B, the layer of filling 102B, and the biscuit body 101C.

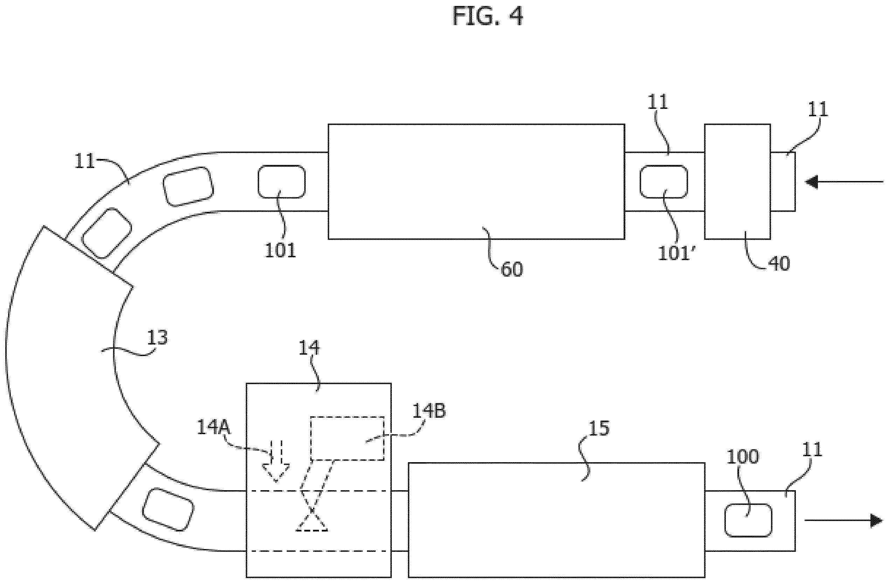

Figure 4 illustrates an example of system for producing biscuits having such a structure.

The production system in question comprises a conveying system, which is for example constituted by an uninterrupted series of conveyor belts 11, and is prearranged for serving the various stations of the system.

The production system comprises a first station 40, corresponding to the spraying station described above with reference to Figure 2. The spraying station 40 operates to obtain a succession of layers of biscuit dough 101' on the supporting surface 20 defined by the conveyor belt 11 that traverses the station 40.

Immediately downstream of the spraying station 40, the production system comprises a baking tunnel 60, which extends along the conveyor belt 11 for a predefined stretch so as to subject the layers of dough 101' conveyed by the conveyor belt 11 to a baking step.

At output from the baking tunnel 60 there is a succession of biscuit bodies 101 that extends along the path of advance of the conveying system.

Preferably, the production system then envisages a cooling tunnel 13, for cooling the biscuit bodies 101 obtained from the layers of dough 101' solidified in the baking tunnel 60, which extends along a predefined stretch of a conveyor belt 11 of the conveying system.

In one or more preferred embodiments like the one illustrated, downstream of the cooling tunnel, the production system comprises a filling and stacking station 14 for creating the stack of biscuit bodies 101 and filling, which receives at input the succession of the biscuit bodies 101 and supplies at output a succession of multilayer biscuits 100.

In one or more preferred embodiments like the one illustrated, the station 14 comprises a dispensing apparatus 14A for depositing a filling on the top surface of the biscuit bodies 101 so as to provide a layer of filling on the surface itself.

Moreover, in one or more preferred embodiments like the one illustrated, the station 14 comprises a manipulating device 14B prearranged for laying a biscuit body 101 on a layer of filling previously deposited by the apparatus 14A on another biscuit body 101.

The dispensing apparatus 14A may itself be a spraying apparatus similar to the spraying apparatus 42, for spraying the filling on the biscuit bodies 101.

The filling and stacking station 14 operates to obtain a stack of biscuit bodies separated by layers of filling, in a number that varies according to the desired number of layers. With reference to the biscuit of Figure 3, the station 14 hence carries out the following steps:
- receiving the biscuit body 101A from the cooling tunnel 13;
- depositing a filling on the biscuit body 101A to obtain the layer of filling 102A;
- receiving the biscuit body 101B from the cooling tunnel 13;
- arranging the biscuit body 101B on the layer of filling 102A;
- depositing a filling on the biscuit body 101B to obtain the layer of filling 102B;
- receiving the biscuit body 101C from the cooling tunnel 13; and
- arranging the biscuit body 101C on the layer of filling 102B.

Downstream of the station 14, the production system comprises a further cooling tunnel 15 for cooling the multilayer biscuits 100 obtained in the previous station, in particular for cooling the corresponding layers of filling 102A, 102B so as to stabilize the structure of the individual biscuit as a whole.

Finally, the system may possibly comprise a cutting station (not illustrated), for example prearranged for carrying out a cutting operation, which is designed to divide the semifinished biscuit products coming from the station 14, into a plurality of biscuits, which are then transferred to a packaging line.

Of course, without prejudice to the principle of the invention, the details of construction and the embodiments may vary, even significantly, with respect to what has been illustrated herein purely by way of non-limiting example, without thereby departing from the scope of the invention, as this is defined in the annexed claims.

## Claims

1. A method for the production of a biscuit (101), comprising:
- preparing a biscuit dough; and
- forming a biscuit body (101) with the biscuit dough,
said method being **characterized in that** preparing said biscuit dough includes preparing a liquid biscuit dough and **in that** forming said biscuit body (101) includes:
- spraying said liquid biscuit dough on a supporting surface (20) so as to cover at least one portion of said supporting surface (20) with a layer of said liquid dough (101') that has an outer contour of predefined shape; and
- baking said sprayed layer (101') of said liquid dough that covers said supporting surface (20) so as to solidify it and obtain said biscuit body.

2. The method according to claim 1, wherein said sprayed layer (101') of liquid biscuit dough has a thickness of less than or equal to 1 mm, preferably comprised between 0.3 mm and 0.7 mm.

3. The method according to claim 1 or claim 2, wherein said liquid biscuit dough has a viscosity equal to at least 1700 centipoise, preferably comprised between 1900 and 5000 centipoise.

4. The method according to any one of the preceding claims, wherein said liquid biscuit dough comprises:
- water, preferably in a weight percentage of between 27.8 wt% and 46.3 wt%;
- flour, preferably in a weight percentage of between 23.8 wt% and 39.6 wt%; and
- sugar, preferably in a weight percentage of between 11.9 wt% and 19.8 wt%.

5. The method according to any one of the preceding claims, wherein said spraying step includes, via at least one nebulizer nozzle (46), obtaining a jet (50) of nebulized biscuit dough, directed against said supporting surface (20).

6. The method according to claim 5, wherein said liquid biscuit dough is fed, under pressure, to the nebulizer nozzle (46) via a pump (44), preferably at a pressure comprised between 15 and 40 bar.

7. The method according to claim 6, wherein said liquid biscuit dough is delivered by said nebulizer nozzle (46) through a hole of said nozzle having a diameter of less than 0.5 mm, even more preferably of less than 0.3 mm.

8. The method according to claim 5, wherein said jet (50) of nebulized biscuit dough has a substantially planar conformation and a triangular shape.

9. The method according to any one of the preceding claims, wherein said spraying step envisages the use of a shaped mask (48) that is set between the nozzle (46) and said supporting surface (20) so as to expose to the jet (50) of the biscuit dough, delivered by said nozzle (46), only a predefined area (20') of said supporting surface (20).

10. The method according to claim 9, wherein said spraying step includes subjecting said mask (48) and said nozzle (46) to a relative movement to subject said predefined area (20') of said supporting surface (20) to said jet (50) delivered by said nozzle (46) throughout its entire extension.

11. The method according to any one of the preceding claims, wherein said supporting surface (20) has a plane conformation so that the biscuit body (101) obtained on said supporting surface (20) also has a plane conformation.

12. The method according to any one of the preceding claims, wherein said supporting surface (20) has a convex conformation so that the biscuit body (101) obtained on said supporting surface (20) has a corresponding hollow conformation.

13. The method according to any one of the preceding claims, wherein, before receiving said biscuit dough, said supporting surface (20) is heated, preferably to a temperature of not higher than 70°C, so that, in said spraying step, the dough that comes into direct contact with said supporting surface (20) solidifies, thus forming a solid film in said sprayed layer of said biscuit dough that covers said supporting surface (20).

14. The method according to any one of the preceding claims, wherein said supporting surface (20) is a surface of a supporting structure or of a conveying device of a machine for the production of biscuits.

15. The method according to any one of the preceding claims, comprising:
- providing at least one conveyor belt (11) that includes a supporting surface (20) mobile along a path of advance;
- spraying said liquid dough onto said supporting surface (20) to obtain thereon a succession of layers of biscuit dough (101') along said path of advance, each having an outer contour of predefined shape; and
- subjecting said layers of biscuit dough (101') to a baking step so as to obtain a succession of biscuit bodies (101) on said supporting surface (20) of said at least one conveyor belt (11), which extends along said path of advance.

16. The method according to claim 15, wherein said biscuit is a multilayer biscuit, said method further comprising the steps of:
- depositing a filling on a first biscuit body (101A) of said succession of biscuit bodies (101) to obtain a layer of filling (102A) on said first biscuit body (101A); and
- arranging a second biscuit body (101B) of said succession of biscuit bodies (101) on said layer of filling (102A),
said multilayer biscuit comprising at least said first and second biscuit bodies (101A, 101B) and said layer of filling (102A).

17. A biscuit (100) comprising at least one biscuit body (101) obtained using a method according to any one of the preceding claims.

18. The biscuit according to claim 17, that has a multilayer structure comprising said biscuit body (101A) defining a bottom layer, a further biscuit body (101B) obtained using a method according to any one of the preceding claims, and an intermediate layer of filling (102A), set between said biscuit body and said further biscuit body.

19. The biscuit according to claim 17 or claim 18, wherein said biscuit body (101A) and/or said further biscuit body (101B) have a thickness of less than or equal to 1 mm, even more preferably comprised between 0. 3 mm and 0.7 mm.
